# EUROPÄISCHE PATENTANMELDUNG

(11) **EP 1 876 696 A2**
(43) Veröffentlichungstag der Anmeldung: **09.01.2008**
(21) Anmeldenummer: 07012029.0
(22) Anmeldetag: 20.06.2007
(51) Int. Cl.: H02M 5/458, H02J 3/36

(54) **Stromrichterschaltungsanordnung für eine Hochvoltgleichspannungsverbindung**

(30) Priorität: 08.07.2006 DE 102006031662
(71) Anmelder: SEMIKRON Elektronik GmbH & Co. KG, 90431 Nürnberg (DE)
(72) Erfinder: Schreiber, Dejan, 90408 Nürnberg (DE)

(57) **Zusammenfassung**

Die Erfindung beschreibt eine Stromrichterschaltungsanordnung zur Umformung mindestens einer ersten mehrphasigen Wechselspannung in eine Hochvoltgleichspannung und zur Umformung dieser in eine zweite mehrphasige Wechselspannung. Die Stromrichterschaltung besteht aus einer ersten (2) und einer zweiten (3) Kaskade von Stromrichterzellen (20,30) mit jeweils ersten, transformatorseitigen, und zweiten, gleichspannungsseitigen Anschlüssen. Die erste Kaskade ist aus einer seriellen Anordnung von ersten Stromrichterzellen (20) gebildet und wobei die zweite Kaskade aus einer seriellen Anordnung von zweiten Stromrichterzellen (30) gebildet. Diese zweiten Stromrichterzellen sind jeweils ausgebildet mit einer Drei-Phasen-Brückenschaltung (32) verbunden mit ersten Anschlüssen zu einem Transformator, mit einen Zwischenkreis (34), wobei in mindestens einem Zweig des Zwischenkreises ein zweites Stromventil (38) und parallel zur Drei-Phasen-Brückenschaltung ein erstes Stromventil (36) angeordnet ist. Die ersten Stromrichterzellen sind identisch zur den zweiten oder als eine Drei-Phasen-Gleichrichterschaltung (21) ausgebildet.

## Beschreibung

Die Erfindung beschreibt eine Stromrichterschaltungsanordnung zur Umformung einer ersten dreiphasigen Wechselspannung aus einer Mehrzahl von Quellen in eine Hochvoltgleichspannung zur Übertragung in einer Hochvoltgleichspannungsverbindung sowie zur weiteren Umformung in eine weitere dreiphasige Wechselspannung. Derartige Hochvoltgleichspannungsverbindungen finden beispielhaft Anwendung in Windenergieanlagen, wobei hier die Ausgangsleistung als auch die Ausgangsspannung der Generatoren dynamisch variieren. In der Anordnung mehrerer Windenergieanlagen zu so genannten Windparks werden nach dem Stand der Technik die einzelnen Windenergieanlagen mit einem gemeinsamen Wechselrichter, der zur Stromeinspeisung in ein Stromnetz dient, mit einer Hochvoltgleichspannungsverbindung verbunden.

Gemäß dem Stand der Technik finden hierbei zur Stromerzeugung vorzugsweise Generatoren der Mittelspannungsklasse Verwendung. Die drei Phasen der Ausgänge dieser Generatoren sind mit einem Transformator verbunden, der die Mittelspannung in Hochspannung der Größenordnung 100000 Volt transformiert. Diese erzeugte Wechselspannung wird anschließend mittels eines Hochspannungsdiodengleichrichters gleichgerichtet und in die Hochvoltgleichspannungsverbindung eingespeist.

Im Anschluss an die Hochvoltgleichspannungsverbindung wird mittels eines Wechselrichters die Gleichspannung in eine geeignete Wechselspannung gewandelt und in ein Stromnetz eingespeist. Derartige Hochvoltgleichspannungsverbindungen sind bekannt als "HVDC" bzw. "HVDC light" Technologie von ABB.

Nachteilig an diesem Stand der Technik ist speziell der extreme Aufwand für die Eingangsfilter. Bekannt sind hierbei Wechselrichter, die ausgebildet sind als serielle Anordnung einer Vielzahl von bipolaren Transistoren in spezieller Aufbau- und Verbindungstechnik. Nachteilig am geschilderten Stand der Technik ist hierbei, dass bei dieser Ausgestaltung des Wechselrichters alle Transistoren gleichzeitig geschaltet werden und hierbei in den Leitungen sehr hohe Spannungsänderungen pro Zeiteinheit auftreten. Zur Beherrschung dieser Spannungsänderungen sind entsprechend groß dimensionierte Filter und auch spezielle aufwändige und teuere Zwischenkreiskondensatoren notwendig. Der schaltungstechnische Aufwand, beispielhaft in Form dieser Hochspannungskondensatoren, sowie zum gleichzeitigen Schalten aller Transistoren ist hierbei nachteilig.

Die DE 101 14 075 B4 offenbart eine Stromrichterschaltung bestehend aus einer Gleichrichterschaltungsanordnung zur Umformung des im Wechselspannungsgenerator erzeugten Wechselstromes in einen Gleichstrom, einer Gleichstromverbindung von der Gleichrichterschaltungsanordnung zu einem kaskadierten Wechselrichter, einem nachgeschalteten Mittelspannungstransformator zur Speisung eines Hochspannungsnetzes sowie einer übergeordneten Steuerung. Der Wechselrichter besteht aus einer kaskadierten, seriellen Anordnung mehrerer Wechselrichterzellen, deren Eingänge in Reihe geschaltet sind wobei jede diese Wechselrichterzellen von der übergeordneten Steuerung aktiv oder durch Überbrückung ihrer Eingänge inaktiv geschaltet werden können.

Die vorliegende Erfindung hat die Aufgabe eine Stromrichterschaltungsanordnung vorzustellen zur Umformung einer ersten Wechselspannung in eine Hochvoltgleichspannung und nach einer entsprechenden Übertragung in eine zweite Wechselspannung zu wandeln, wobei die Stromrichterschaltungsanordnung Fehlertolerant gegen den Ausfall einzelner Halbleiterschalter sein soll, ebenso sollen die Spannungsänderungen pro Zeit gegenüber dem genannten Stand der Technik wesentlich verringert werden und weiterhin der Aufbau mit Standardleistungshalbleitermodulen möglich sein.

Die Aufgabe wird gelöst durch eine Stromrichterschaltungsanordnung mit den Merkmalen des Anspruchs 1. Bevorzugte Weiterbildungen finden sich in den Unteransprüchen.

Die erfinderische Stromrichterschaltungsanordnung dient zur Umformung mindestens einer ersten mehrphasigen Wechselspannung in eine Hochvoltgleichspannung. Die mehrphasige Wechselspannung kann beispielhaft durch einen Mehrzahl von Generatoren im Rahmen einer dezentralen Energieversorgung oder in einem Windpark erzeugt sein. Die Stromrichterschaltungsanordnung dient ebenso zur Umformung dieser Hochvoltgleichspannung in eine zweite mehrphasige Wechselspannung zur Einspeisung in ein Stromnetz, beispielhaft ein Mittelspannungsnetz.

Die erfinderische Stromrichterschaltungsanordnung bestehend aus einer ersten und einer zweiten Kaskade von Stromrichterzellen, wobei die erste Kaskade aus einer seriellen Anordnung von ersten Stromrichterzellen und die zweite Kaskade aus einer seriellen Anordnung von zweiten Stromrichterzellen gebildet ist.

Jede zweite Stromrichterzelle weist erste, transformatorseitige, und zweite, gleichspannungsseitige Anschlüsse auf. Die ersten Anschlüsse dienen der Verbindung der zugeordneten Wicklungen eines Transformators mit den jeweiligen Mittelpunkten einer Drei-Phasen-Brückenschaltung. Diese ist ihrerseits verbunden mit einem Zwischenkreis, der in mindestens einem Zweig ein zweites Stromventil und parallel zur Drei-Phasen-Brückenschaltung geschaltet ein erstes Stromventil aufweist. Dieses Stromventil ist mit den ersten Anschlüsse der Stromrichterzelle verbunden.

Die ersten Stromrichterzellen sind entweder identisch zu den zweiten ausgebildet, oder sie weisen eine Drei-Phasen-Gleichrichterschaltung auf, deren jeweiligen Mittelpunkte mit den zugeordneten Wicklungen eines Transformator verbunden sind. Die zweiten, gleichspannungsseitigen Anschlüsse sind ebenfalls schaltungsgerecht mit der Drei-Phasen-Gleichrichterschaltung verbunden.

Die genannten Kaskaden sind ausgebildet als serielle Verbindung der zweiten Anschlüsse benachbarter Stromrichterzellen.

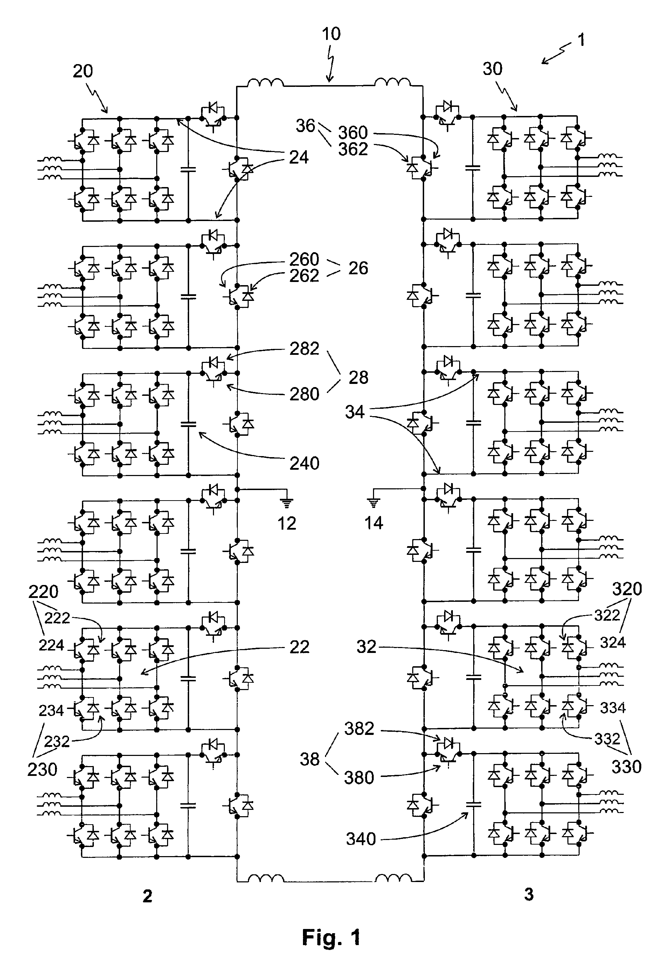

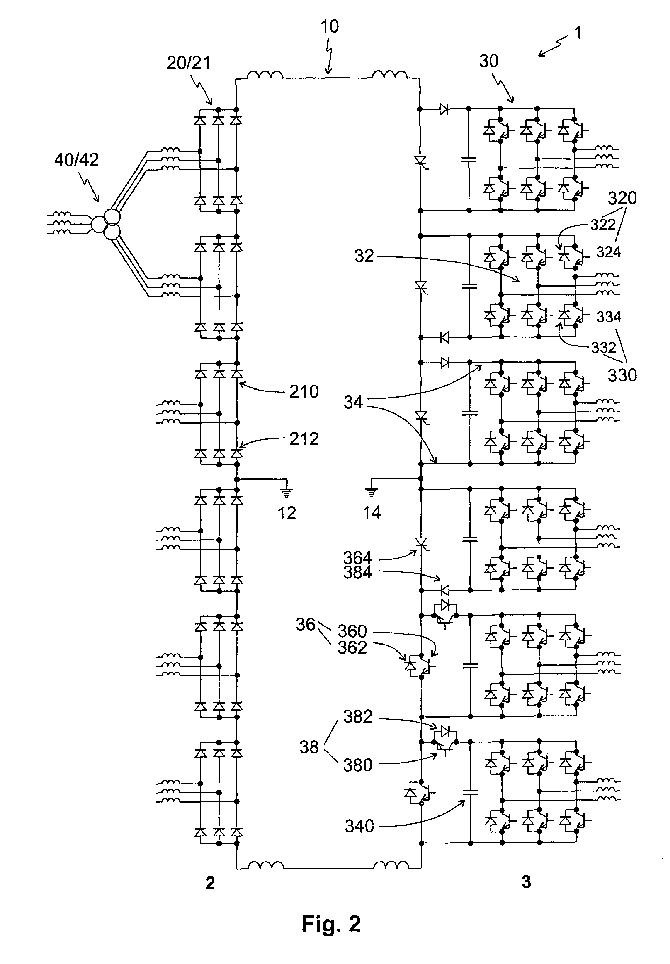

Nachfolgend wird der erfinderische Gedanke anhand der Fig. 1 und 2 beispielhaft erläutert.

Fig. 1 zeigt eine erste Ausgestaltung der erfindungsgemäßen Stromrichterschaltungsanordnung.

Fig. 2 zeigt eine zweite Ausgestaltung der erfindungsgemäßen Stromrichterschaltungsanordnung.

Fig. 1 zeigt eine erste beispielhafte Ausgestaltung einer erfindungsgemäßen Stromrichterschaltungsanordnung (1). Dargestellt ist hier eine vollständig symmetrische Ausgestaltung, wobei die Ausbildung der nicht dargestellten Transformatoren hierbei nicht berücksichtigt ist.

Jede Stromrichterzelle (20, 30) besteht aus einer Drei-Phasen-Brückenschaltung (22, 32), die ihrerseits ausgebildet ist mit jeweils einem oberen (220, 320) und einem unteren (230, 330) Leistungsschalter pro Phase. Jeder Leistungsschalter (220, 230, 320, 330) besteht seinerseits aus einer Parallelschaltung einer Mehrzahl von bipolaren Transistoren (224, 234, 324, 334), wobei nur jeweils einer dargestellt ist. Antiparallel zu diesen Transistoren (224, 234, 324, 334) sind eine Mehrzahl von Freilaufdioden (222, 232, 322, 332) geschaltet, wobei wiederum nur jeweils eine dargestellt ist. Die Transistoren und Dioden sind hierbei beispielhaft Halbleiterbauelemente der Spannungsklasse 1700V, wie sie in Standardleistungshalbleitermodulen vielfältig eingesetzt werden. Die Gleichspannungsseite der Drei-Phasen-Brückenschaltung (22, 32) ist mit einem Zwischenkreis (24, 34) verbunden, der mindestens einen Kondensator (240, 340) aufweist. Die Wechselspannungsseite der Drei-Phasen-Brückenschaltung (22, 32) ist jeweils mittig mit einer zugeordneten Wicklung eines Transformators verbunden.

Parallel zur Drei-Phasen-Brückenschaltung (22, 32) und zum Kondensator (240, 340) ist ein erstes Stromventil (26, 36) geschaltet. Dieses ist in dieser Ausgestaltung der Stromrichterschaltungsanordnung (1) ausgebildet als eine Antiparallelschaltung mindestens eines bipolaren Transistors (260) mit mindestens einer Diode (262). Dieses Stromventil (26, 36) dient der Überbrückung der jeweiligen Stromrichterzelle (20, 30). Somit kann einerseits eine Kaskade (2, 3) mit redundanter Anzahl von Stromrichterzellen (20, 30) ausgebildet werden. Ebenso kann somit eine defekte Stromrichterzelle überbrückt werden und damit die Funktionalität der gesamten Stromrichterschaltungsanordnung (1) auch bei Einzelausfällen erhalten bleiben.

Der Zwischenkreis (24, 34) weist weiterhin in einem Zweig ein zweites Stromventil (28, 38) auf, welches ebenfalls als eine Antiparallelschaltung mindestens eines bipolaren Transistors (280, 380) mit mindestens einer Diode (282, 382) ausgebildet.

In der dargestellten Ausbildung der Stromrichterschaltungsanordnung (1) sind die Kaskaden (2, 3) aus je sechs Stromrichterzellen (20, 30) gebildet, wobei dies nur beispielhaft ist. Eine Hochspannungsgleichstromübertragung arbeitet beispielhaft mit einer Spannung von 100kV, wozu abhängig von den Spannungsklassen der verwendeten Halbleiterbauelemente die Anzahl der seriell geschalteten Stromrichterzellen (20, 30) in der Größenordnung von 100 liegt.

Bei einer derartigen Ausgestaltung der Stromrichterschaltungsanordnung (1) ist es aus Isolationsgründen vorteilhaft jede Kaskade (2, 3) in Ihrem Mittelpunkt mit Erdpotential (12, 14) zu verbinden. Somit ist die Hochspannungsgleichstromübertragung (10) mit einer beispielhaften Spannung von 100kV vorteilhafterweise an ihrem Mittelpunkt mit Erdpotential verbunden wodurch das Potential der einzelnen Leitung gegen Erde betragsmäßig nur jeweils 50kV beträgt und somit deren Isolation vereinfacht ist.

Ein weiterer Vorteil dieser Ausgestaltung der Stromrichterschaltungsanordnung (1) ist, dass durch eine versetzte Taktung der einzelnen Stromrichterzellen (20, 30) die Spannungsänderungen pro Zeit wesentlich geringer sind im Vergleich zum o.g. Stand der Technik. Hieraus resultiert auch, dass die weiterhin benötigten Eingangsfilter wesentlich weniger aufwändig ausgebildet sein müssen.

Ebenso von Vorteil ist, dass bei der erfindungsgemäßen Ausgestaltung der Stromrichterschaltungsanordnung (1) durch eine versetzte Taktung der einzelnen Stromrichterzellen (20, 30) die Netzstromwelligkeit um einen Faktor, der der Anzahl der Stromrichterzellen (20, 30) entspricht, geringer ist verglichen zum Stand der Technik. Bei einer Taktfrequenz von beispielhaft 1 kHz und einem Versatz von 0,1 ms entspricht die Netzstromwelligkeit einer virtuellen Schaltfrequenz von 10kHz.

Bei dieser symmetrischen Ausbildung der Stromrichterschaltungsanordnung (1) kann Energie in beide Richtungen, von der ersten (2) zur zweiten (3), aber auch von der zweiten (3) zur ersten (2) Kaskade übertragen werden. Bei der Übertragung von der ersten Kaskade (2) zur zweiten Kaskade (3) sind alle die Transistoren (260) des ersten Stromventils (26) nicht leitend geschaltet, somit ist nur der Strompfad über die Diode (262) leitend. Die jeweiligen Transistoren (280) des zweiten Stromventils (28) derjenigen Stromrichterzellen die zugeschaltet sein sollen sind in diesem Fall leitend geschaltet. Durch derartiges Zuschalten von Stromrichterzellen (20) wird die erzeugte Gleichspannung der ersten Kaskade (2) erhöht, bzw. bei Wegschalten verringert.

Die Transistoren (380) der zweiten Stromventile (38) der zweiten Kaskade (3) sind hierbei alle nicht leitend geschaltet, wodurch nur der Strompfad durch die Diode (382) leitend ist. Abhängig von der übertragenen Gleichspannung sind die Transistoren (360) des ersten Stromventils (36) leitend geschaltet. Durch zyklisches Schalten dieser Transistoren (360) kann erreicht werden, dass alle Stromrichterzellen (30) gleichmäßig belastet werden. Ebenso ist es möglich einzelne defekte Zellen grundsätzlich abzuschalten. Hierzu kann auch ein zusätzlicher, nicht dargestellter, mechanischer Schalter dienen.

Ausgeschaltete funktionsfähige Zellen können zudem notwendige Blindleistung für das angeschlossene Wechselspannungsnetz liefern, wobei diese Blindleistung beliebige kapazitive bzw. induktive Anteile aufweisen kann.

Die erfindungsgemäße Stromrichterschaltungsanordnung (1) weist durch ihren kaskadierten Aufbau aus Kaskaden (2, 3) von Stromrichterzellen (20, 30) mit Standardbauteilen den Vorteil auf, dass auch Hochspannungsgleichstromübertragungen für kleine Leistungen beispielhaft ab 1 MW wirtschaftlich herstellbar sind. Der skalierbare Aufbau weist somit den Vorteil auf auch die Kosten und den Aufwand annährend linear mit der Leistung zu skalieren. Hierdurch ist beispielhaft auch der wirtschaftliche Einsatz von Hochspannungsgleichstromübertragungen zwischen asynchronen Inselnetzen möglich.

Fig. 2 zeigt eine zweite beispielhafte Ausgestaltung einer erfindungsgemäßen Stromrichterschaltungsanordnung. Dargestellt ist hier eine unsymmetrische Ausgestaltung, mit ersten Stromrichterzellen, die als Gleichrichter ausgebildet sind und zweiten Stromrichterzellen, deren grundsätzliche Ausbildung denjenigen Stromrichterzellen gemäß Fig. 1 entspricht.

Jede erste Stromrichterzelle (20) besteht aus einer Drei-Phasen-Gleichrichterschaltung (21) mit jeweils einem oberen (210) und einem unteren (212) Stromventil pro Phase, wobei jedes Stromventil (210, 212) ausgebildet ist als ein Diode oder bevorzugt als eine Mehrzahl parallel geschalteter Dioden beispielhaft der Spannungsklasse 1700V, wodurch als Komponenten der Kaskade (2) Standardleistungshalbleitermodule Verwendung finden können.

Die Gleichspannungsseite der Drei-Phasen-Gleichrichterschaltung (21) bildet zweite, gleichspannungsseitige Anschlüsse aus, während die Wechselspannungsseite jeweils mittig mit einer zugeordneten Wicklung (42) eines Transformators (40) verbundenen ist.

Hierbei ist es besonders vorteilhaft, wenn die ersten, transformatorseitigen Anschlüsse zweier benachbarter erster Stromrichterzellen (20) mit jeweils zugeordneten Wicklungen (42) eines Transformators (40) verbunden sind.

Die zweiten Stromrichterzellen (30) sind in zwei unterschiedlichen Ausgestaltungen ausgebildet. In jeder Ausgestaltung besteht die zweite Stromrichterzelle (30) aus einer Drei-Phasen-Brückenschaltung (32), die ihrerseits ausgebildet ist mit jeweils einem oberen (320) und einem unteren (330) Leistungsschalter pro Phase. Jeder Leistungsschalter (320, 330) besteht seinerseits aus einer Parallelschaltung einer Mehrzahl von bipolaren Transistoren (324, 334), wobei nur jeweils einer dargestellt ist. Antiparallel zu den Transistoren ist jeweils eine Mehrzahl von Freilaufdioden (322, 332) geschaltet, wobei wiederum nur jeweils eine dargestellt ist. Die Transistoren und Dioden sind hierbei beispielhaft Halbleiterbauelement der Spannungsklasse 1700V, wie sie in Standardleistungshalbleitermodulen vielfältig eingesetzt werden. Die Gleichspannungsseite der Drei-Phasen-Brückenschaltung (32) ist mit einem Zwischenkreis (34) verbunden, der mindestens einen Kondensator (340) aufweist. Die Wechselspannungsseite der Drei-Phasen-Brückenschaltung (32) ist jeweils mittig mit einer zugeordneten Wicklung eines nicht dargestellten Transformators verbundenen.

Parallel zur Drei-Phasen-Brückenschaltung (32) und zum Kondensator (340) ist ein erstes Stromventil (36) geschaltet. Dieses ist in der ersten Ausgestaltung der zweiten Stromrichterzellen (30) ausgebildet als eine Antiparallelschaltung mindestens eines bipolaren Transistors (360) mit mindestens einer Diode (362). Dieses Stromventil (36) dient der Überbrückung der jeweiligen Stromrichterzelle (30). Somit kann einerseits eine Kaskade (3) mit redundanter Anzahl von Stromrichterzellen (30) ausgebildet werden. Ebenso kann somit eine defekte Stromrichterzelle überbrückt werden und damit die Funktionalität der gesamten Stromrichterschaltungsanordnung (1) auch bei Einzelausfällen erhalten bleiben.

Der Zwischenkreis (34) weist weiterhin in einem Zweig ein zweites Stromventil (38) auf, welches ebenfalls als eine Antiparallelschaltung mindestens eines bipolaren Transistors (380) mit mindestens einer Diode (382) ausgebildet.

In der zweiten Ausgestaltung der zweiten Stromrichterzellen (30) ist das zweite Stromventil (38) ausgebildet als mindestens eine Diode (384). Bei einer Mehrzahl sind diese selbstverständlich parallel geschaltet. Das erste Stromventil (36) ist als ein Thyristor (364) ausgebildet.

In der dargestellten Ausbildung der Stromrichterschaltungsanordnung (1) sind die Kaskaden (2, 3) wiederum aus je sechs Stromrichterzellen (20, 30) gebildet, wobei diese ebenfalls beispielhaft ist und der Übersichtlichkeit dient. Die genaue Anzahl bestimmt sich aus der Spannung der Hochspannungsgleichstromübertragung (10), den Spannungsklassen der verwendeten Leistungshalbleiterbauelemente sowie der gewünschten Redundanz an Stromrichterzellen (20, 30).

Bei einer derartigen Ausgestaltung der Stromrichterschaltungsanordnung (1) ist es aus Isolationsgründen vorteilhaft jede Kaskade in Ihrem Mittelpunkt mit Erdpotential (12, 14) zu verbinden.

Bei dieser unsymmetrischen Ausbildung der Stromrichterschaltungsanordnung (1) kann Energie ausschließlich von der ersten (2) zur zweiten (3) Kaskade übertragen werden.

Beispielhaft ist an zwei ersten Stromrichterzellen (20) der Anschluss an einen zugeordneten Transformator (40) dargestellt. Es ist besonders vorteilhaft, dass die ersten, transformatorseitigen Anschlüsse zweier benachbarter Stromrichterzellen (20) mit jeweils zugeordneten Wicklungen (42) eines Transformators (40) verbunden sind.

## Patentansprüche

1. Stromrichterschaltungsanordnung (1) zur Umformung mindestens einer ersten mehrphasigen Wechselspannung in eine Hochvoltgleichspannung und zur Umformung dieser in eine zweite mehrphasige Wechselspannung bestehend aus einer ersten (2) und einer zweiten (3) Kaskade von Stromrichterzellen (20, 30) mit jeweils ersten, transformatorseitigen, und zweiten, gleichspannungsseitigen Anschlüssen,
wobei die erste Kaskade (2) aus einer seriellen Anordnung von ersten Stromrichterzellen (20) gebildet ist und
wobei die zweite Kaskade (3) aus einer seriellen Anordnung von zweiten Stromrichterzellen (30) gebildet ist
wobei eine zweite Stromrichterzelle (30) ausgebildet ist mit einer Drei-Phasen-Brückenschaltung (32) verbunden mit ersten Anschlüssen zu einem Transformator (40), mit einen Zwischenkreis (34), wobei in mindestens einem Zweig des Zwischenkreises (34) ein zweites Stromventil (38) und parallel zur Drei-Phasen-Brückenschaltung (32) ein erstes Stromventil (36) angeordnet ist,
wobei die erste Stromrichterzelle (20) identisch zur zweiten (30) oder als eine Drei-Phasen-Gleichrichterschaltung (21) ausgebildet ist.

2. Stromrichterschaltungsanordnung nach Anspruch 1, wobei
jedes erste Stromventil (26, 36) von Stromrichterzellen (20, 30) in einer Kaskade (2, 3) als eine Antiparallelschaltung mindestens eines bipolaren Transistors (260, 360) mit mindestens einer Diode (262, 362) ausgebildet ist.

3. Stromrichterschaltungsanordnung nach Anspruch 1, wobei
mindestens ein erstes Stromventil (26, 36) als ein Thyristor (264, 364) oder als ein mechanischer Schalter ausgebildet ist.

4. Stromrichterschaltungsanordnung nach Anspruch 1, wobei
das zweite Stromventil (28, 38) einer Stromrichterzelle (20, 30) als eine Antiparallelschaltung mindestens eines bipolaren Transistors (280, 380) mit mindestens einer Diode (282, 382) oder ausschließlich als mindestens eine Diode (282, 382) ausgebildet ist.

5. Stromrichterschaltungsanordnung nach Anspruch 1, wobei
der Zwischenkreis (24) mindestens einen Kondensator (240) aufweist.

6. Stromrichterschaltungsanordnung nach Anspruch 1, wobei
jeweils die ersten, transformatorseitigen Anschlüsse zweier benachbarter erster (20) und / oder zweiter (30) Stromrichterzellen mit jeweils zugeordneten Wicklungen (42) eines Transformators (40) verbunden sind.

7. Stromrichterschaltungsanordnung nach Anspruch 1, wobei
alle ersten, transformatorseitigen Anschlüsse erster (20) und / oder zweiter (30) Stromrichterzellen mit jeweils zugeordneten Wicklungen eines Transformators verbundenen sind.

8. Stromrichterschaltungsanordnung nach Anspruch 1, wobei
mindestens eine Kaskade (2, 3) in Ihrem Mittelpunkt mit Erdpotential (12, 14) verbunden ist.
